# EUROPEAN PATENT SPECIFICATION

(11) **EP 2 247 028 B1**
(45) Date of publication and mention of the grant of the patent: **15.03.2017**
(21) Application number: 08715405.0
(22) Date of filing: 03.04.2008
(51) Int. Cl.: H04L 12/14, G06Q 20/12, G06Q 20/14, H04M 15/00, H04W 4/24

(54) **OFFLINE CHARGING SYSTEM AND METHOD**
OFFLINE-LADESYSTEM UND -VERFAHREN
SYSTÈME ET PROCÉDÉ DE FACTURATION HORS LIGNE

(30) Priority: 23.01.2008 CN 200810004714
(43) Date of publication of application: 03.11.2010
(73) Proprietor: ZTE Corporation, Shenzhen, Guangdong 518057 (CN)
(72) Inventor: JIN, Renkang, Shenzhen Guangdong 518057 (CN); JIANG, Zhihong, Shenzhen Guangdong 518057 (CN); ZHAN, Yajun, Shenzhen Guangdong 518057 (CN); MOU, Jianming, Shenzhen Guangdong 518057 (CN)
(74) Representative: Petraz, Gilberto Luigi
(86) International application number: PCT/CN2008/070673
(87) International publication number: WO 2009/094865

(56) References cited:
- EP-A2- 1 414 185
- CN-A- 1 744 559
- CN-A- 101 094 081
- KR-A- 20030 058 553
- US-A1- 2004 076 143
- US-A1- 2004 266 394
- FONKNECHTEN D., GHRIBI B., BESSET C., AIDAN B.: "Service Aware Intelligent GGSN", ALCATEL_TELECOMMUNICATIONS_REVUES, 54 RUE LA BOÃ CR TIE 75008 PARIS FRANCE, 31 March 2004 (2004-03-31), XP040427099,

## Description

### Technical Field

The present invention relates to a charging system and method used in the data communication technology field, and more especially, to a system and a method for offline charging in the CDMA communication system.

### Background of the related art

With the deployment of new generation wireless networks by the operators, high-speed wireless access comes into being, followed by the enriched data services for the wireless access users. With the development of the enriched services, the operators need to control and manage the mobile communication value chain in order to avoid becoming providers who only provide the bearer channels; therefore, the content charging is a new need for the operators to charge.

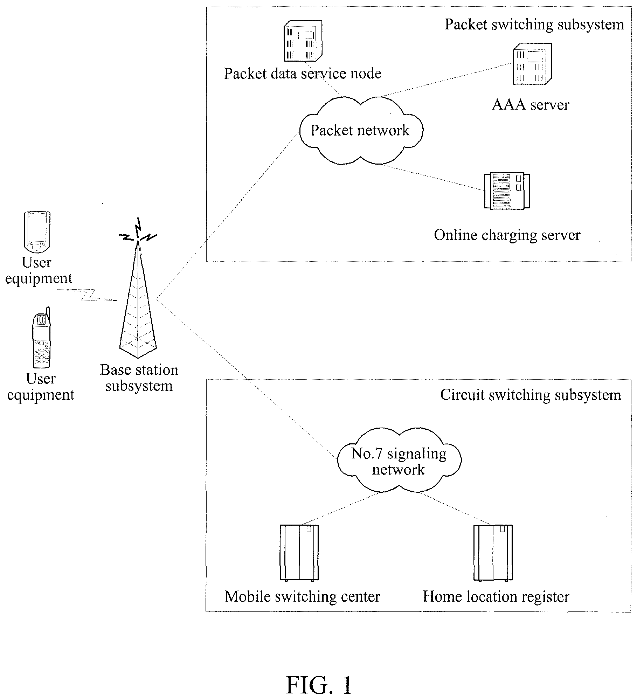

FIG. 1 shows the structure diagram of the CDMA2000 network in the prior art, and the network comprises the Packet Data Service Node (PDSN), the Authentication, Authorization, and Accounting Server (AAAS), Online Charging Server (OCS), User Equipment (UE), Base Station Subsystem, and Circuit Switching Subsystem.

Roughly speaking, the content charging methods implemented at present only support services based on the WAP (Wireless Application Protocol), and are not adapt to other types of services, such as those in Hypertext Transfer Protocol (HTTP), Simple Mail Transport Protocol (SMTP)/Post Office Protocol 3 (POP3)/Interactive Mail Access Protocol (IMAP), and Real-Time Transport Protocol (RTP)/Real Time Stream Protocol (RTSP)/Real-time Transport Control Protocol (RTCP).

In order to differentiate the content charging and the non-content charging, an analysis platform should be introduced between the access gateways to classify the packets so as to charge the content charging packets and non-content charging packets respectively. This method, however, makes the implementation of the analysis platform complicated and less flexible. Since the analysis platform is required to be configured with numerous and jumbled filter rules to analyze the packets, the implementation of the content charging function is too complicated in the present mobile communication system.

An offline charging method is also known from FONKNECHTEN D., GHRIBI B., BESSET C., AIDAN B.: "Service Aware Intelligent GGSN", EP1414185A2, US2004266394A1 and KR20030058553.

In addition, there is no offline charging system and method for the content charging in the CDMA2000 system in the prior art, and there is no convenient method to differentiate the non-content charging and content charging.

### Content of the Invention

The technical problem to be solved by the present invention is to provide a system and a method for offline charging to conveniently differentiate non-content charging packets and content charging packets and further to implement offline charging for the content charging packets.

The features of the system and method according to the present invention are defined in the independent claims, and the preferable features according to the present invention are defined in the dependent claims.

The invention provides a system for offline charging, the system comprising a packet data service node (PDSN), an authentication, authorization, and accounting server (AAAS), and a content charging gateway (CCG), wherein:
the PDSN is arranged to analyze user types, differentiate data packets into data packets of content charging users and data packets of non-content charging users, adopt different charging policies for different users based on user sorting policy and route data packets of content charging users to the CCG;
the CCG is arranged to analyze content of the data packets routed by the PDSN, interact with the AAAS, and implement offline charging function;
the AAAS is arranged to generate a Call Detail Record (CDR) according to content charging result reported by the CCG.

Preferably, the system further comprises an online charging server (OCS); wherein said CCG is arranged to connect with the PDSN, the AAAS, and the OCS through packet network.

Preferably, if determining that the user is an offline charging user, the PDSN is arranged to route the data packets of the user to said CCG when content charging is required.

Preferably, said CCG comprises at least one analyzer responsible for analyzing the content of the data packets, adopting different charging rules depending on the content, and generating content-based charging result consequently.

Preferably, the CCG and the PDSN are independent systems in logic; the CCG and the PDSN can be implemented together or separately in physics; and a way of implementing the CCG and the PDSN together in physics is adopt in practice.

Preferably, the PDSN is further arranged to charge the data packets according to a time length or traffic.

The invention also provides a method for offline charging, the method comprising:
adding a content charging gateway (CCG) in a packet data network;
a packet data service node (PDSN) analyzing user types, differentiating data packets into data packets of content charging users and data packets of non-content charging users, adopting different charging policies for different users based on user sorting policy and routing data packets of content charging users to the CCG;
the CCG analyzing content of the data packets routed by the PDSN, charging the data packets with charging rules corresponding to the content, and reporting obtained charging information to an authentication, authorization, and accounting server (AAAS); and
the AAAS generating an offline charging Call Detail Record (CDR) according to the information reported by the CCG.

Preferably, the PDSN further picks up offline charging users according to user sorting policy and regularly charges the offline charging users according to traffic or time length; or does not charge the offline charging users.

Preferably, said CCG comprises at least one analyzer responsible for analyzing content of the data packets, adopting different charging rules depending on the content, and generating content-based charging result consequently.

Preferably, the user equipments access to the PDSN in the packet data network through a wireless network, and said PDSN sending user equipments' authentication requests to the AAAS, and the PDSN determining that the users are offline charging users according to the authentication result sent back by the AAAS and sending an offline charging access notification to the CCG, then the CCG responding with a charging start request; the CCG analyzing the user equipments' data sent by the PDSN, identifying service types and charging according to different service types, and the AAAS generating an offline CDR according to the charging information reported by the CCG.

Preferably, the services supported by the CCG comprise: hypertext transfer protocol services, wireless application browser services, multimedia information services, stream services, mail services, and file transport protocol services.

Preferably, the PDSN charge the data packets according to a time length or traffic.

The beneficial effects of the present invention are:
With the charging scheme put forward in the present invention, the content charging function is implemented while the charging technologies in the prior art is integrated; these two charging methods do not affect each other, and the regular charging (such as charging according to the time length, traffic) and content charging function can be implemented for the users simultaneously to charge according to the content and time length / flow rate.

### Brief Description of Drawings

FIG. 1 shows a network structure diagram of the CDMA2000 in the prior art;
FIG. 2 shows a network structure diagram of the content charging system in the CDMA2000 network in accordance with the present invention;
FIG. 3 is a flow chart of an embodiment in accordance with the method of the present invention.

### Preferred Embodiments of the Invention

The main idea of the present invention is: adding Content Charging Gateway (CCG) to implement content charging for analyzed packet data service content, where the CCG comprises several analyzers responsible for analyzing the content, and meanwhile the CCG is responsible for interacting with the AAAS to implement the offline charging function. While the PDSN has the function in the prior art, and applies different charging polices to different users according to the conveniently applied user-based sorting polices.

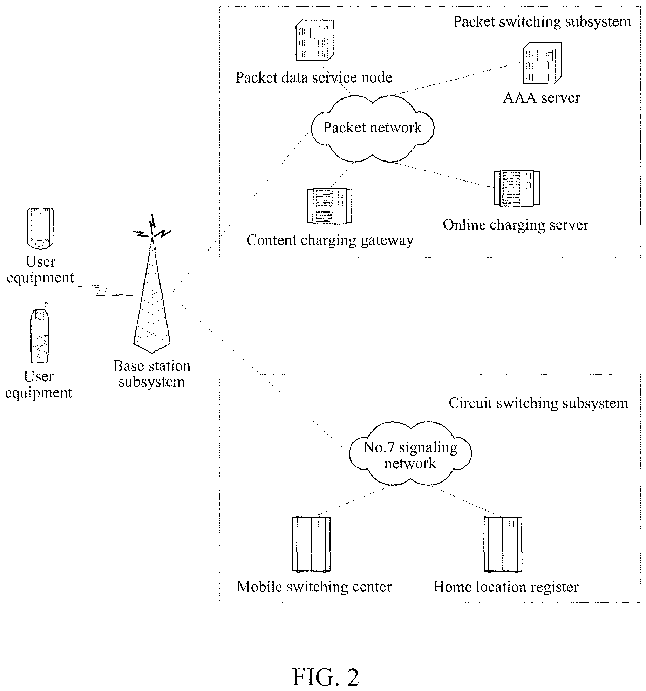

As shown in FIG. 2, the present invention puts forward an offline charging system comprising the PDSN, the AAAS and the CCG.

The CCG is responsible for content charging function by analyzing content user accessing according to the set rules, applying different charging rules to generate charging result according to the content, and reporting the charging result.

In the network hierarchy, the CCG belongs to the service access layer and mainly solves the content-based access, service control and charging support etc. of the data service carried in the existing mobile communication network, and supports all kinds of typical data services such as the HTTP services, WAP browsing services, Multimedia Messaging Service (MMS), stream service, mail service, FTP service, and so on.

The CCG and AAAS cooperate to implement the offline charging functions for the content charging users.

In logic, the CCG and PDSN are independent systems respectively. In physics, they can be implemented together or separated. In practice, it is recommended to implement PDSN and CCG together in physics.

An offline charging method in accordance with the present invention comprises the following steps:
(1) Add a CCG in the packet data network;
(2) The user equipment accesses to the PDSN of the packet data network through the wireless network;
(3) The PDSN sends an authentication request to the AAAS to request authenticating the user equipment;
(4) The AAAS authenticates the user of the user equipment and returns the authentication result to the PDSN;
(5) The PDSN determines that the user is an offline charging and content charging user according to the authentication result and sends an offline charging and content charging access notification to the CCG;
(6) After the CCG receives the notification, it sends the content charging start request to the AAAS;
(7) After the AAAS receives the request, it sends an acknowledgement to the CCG;
(8) The user equipment sends the user's data packets to the PDSN through the wireless network;
(9) The PDSN determines that it is the data packet of the content charging user and forwards the data packet to the CCG;
   Meanwhile, the PDSN may charge the user's data packets according to the time length and the traffic, or does not charge.
(10) The CCG analyzes the user packets, identifies different service types, charges according to the charging rules of different service types, and sends the corresponding charging information of all services used by the user to the AAAS;
(11) The AAAS generates the CDR (Call Detail Record) according to the offline charging information of the content charging reported by the CCG.

The technical scheme of the present invention will be described in detail in the following in conjunction with an embodiment.

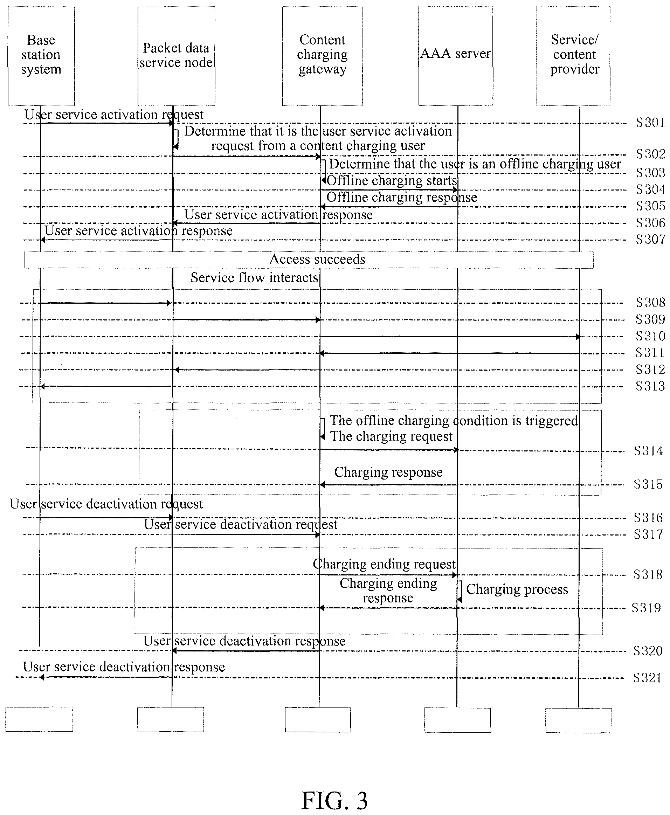

With reference to FIG. 2 and FIG. 3, the embodiment applying the present invention is: when the offline charging and content charging users performs the FTP (file transport protocol) downloading and online demand service, the specific work flow comprises the following steps:
S301, the user equipment accesses to the wireless base station system, and the wireless base station system notifies the PDSN about the user access through the cable network;
S302, the PDSN sends the user's authentication request to the AAAS; after the PDSN receives the authentication success acknowledgement, it determines that the user is an content charging user and needs offline charging, and then sends an offline charging and content charging user access notification to the CCG;
S303, after the CCG receives the offline charging user access notification, it determines that the user is an offline charging user and then it prepares offline charging related resources;
S304, the CCG sends the content charging start request to the AAAS;
S305, after the AAAS receives the content charging start request, it sends a content charging start success response to the CCG;
S306, the CCG responds to the access request from the content charging user to the PDSN;
S307, the PDSN responds to the user equipment with an access success acknowledgement through the base station system;
   Until now, the CCG, PDSN and base station system complete the user session establishment flow respectively, and the service interaction can begin to be performed.
S308, the user's FTP service data packet reaches the base station system through the wireless network, and the base station system sends the user's FTP service data packets to the PDSN through the cable network;
S309, the PDSN determines that the user is a content charging user, and then it forwards the user's FTP service data packets to the CCG;
S310, the CCG searches for a charging rule and corresponding FTP analyzer according to user's configuration, performs content analyzing and charging, and then forwards the user's FTP service data packets to the server of the service/content provider;
S311, the server of the service/content provider sends the user's FTP service data packets through the CCG;
S312, the CCG searches for a charging rule and corresponding FTP analyzer according to user's configuration, performs content analyzing and charging, , and then forwards the user's FTP service data packets to the PDSN;
S313, the PDSN forwards the user's FTP service data packet to the user equipment through the base station system;
S314, the CCG finds out that the condition of offline charging has been triggered and sends the charging request carrying the content charging information to the AAAS.
S315, the AAAS responds to the charging request with a success acknowledgement;
S316, the user equipment sends the user service deactivation request through the base station system;
S317, the PDSN finds out that the user is a content charging user and sends the user deactivation request to the CCG;
S318, after the CCG receives the user deactivation request, it sends the charging ending request carrying the content charging information to the AAAS;
S319, the AAAS responds to the CCG with a charging ending request acknowledgement;
S320, the CCG releases the response resource and sends the user deactivation response to the PDSN;
S321, the PDSN sends the user deactivation response to the user equipment through the base station;

The CCG, the PDSN and the base station system complete the user session release flow respectively.

The above embodiment demonstrates the process of offline content charging user performing FTP service and online demand service. Of course that according to the method provided in the present invention, all other data services can be implemented.

The scope of protection of the present invention is determined by the appended claims.

### Industrial Applicability

A system and method for the offline charging disclosed by the present invention applies to implement offline charging for content charging in the CDMA2000 system, and it applies a convenient method to differentiate the non-content charging and the content charging. The present invention implements content charging for the analyzed packet data service content by adding a CCG, and the CCG comprises several analyzers responsible for analyzing the content, meanwhile, the CCG is responsible for interacting with the AAAS to achieve the offline charging function. Moreover, the PDSN keeps the function in the prior art and applies different charging polices to different users according to the user-based sorting police.

## Claims

1. A system for offline charging, **characterized in that** the system comprises a packet data service node, PDSN, an authentication, authorization, and accounting server, AAAS, a content charging gateway, CCG, and an online charging server, OCS, wherein:
the PDSN is arranged to analyze user types, differentiate data packets into data packets of content charging users and data packets of non-content charging users, adopt different charging policies for different users based on user sorting policy and route data packets of content charging users to the CCG when determining that a user is a content charging user and needs offline charging;
the CCG is arranged to analyze content of the data packets routed by the PDSN, interact with the AAAS, and implement offline charging function;
the AAAS is arranged to generate an offline charging Call Detail Record, CDR, according to content charging result reported by the CCG.

2. The system of claim 1, wherein said CCG is arranged to connect with the PDSN, the AAAS, and the OCS through packet network.

3. The system of claim 1, wherein if determining that the user is an offline charging user, the PDSN is arranged to route the data packets of the user to said CCG when content charging is required.

4. The system of claim 1, wherein said CCG comprises at least one analyzer responsible for analyzing the content of the data packets, adopting different charging rules depending on the content, and generating content-based charging result consequently.

5. The system of claim 1, wherein the CCG and the PDSN are independent systems in logic; the CCG and the PDSN can be implemented together or separately in physics; and a way of implementing the CCG and the PDSN together in physics is adopt in practice.

6. The system of claim 1, wherein the PDSN is further arranged to charge the data packets according to a time length or traffic.

7. A method for offline charging, **characterized in that** the method comprises:
adding a content charging gateway, CCG, in a packet data network;
a packet data service node, PDSN, analyzing user types, differentiating data packets into data packets of content charging users and data packets of non-content charging users, adopting different charging policies for different users based on user sorting policy, and routing data packets of content charging users to the CCG when determining that a user is a content charging user and needs offline charging;
the CCG analyzing content of the data packets routed by the PDSN, charging the data packets with charging rules corresponding to the content, and reporting obtained charging information to an authentication, authorization, and accounting server, AAAS; and
the AAAS generating an offline charging Call Detail Record, CDR, according to the information reported by the CCG.

8. The method of claim 7, wherein the PDSN further picks up offline charging users according to user sorting policy and regularly charges the offline charging users according to traffic or time length; or does not charge the offline charging users.

9. The method of claim 7, wherein said CCG comprises at least one analyzer responsible for analyzing content of the data packets, adopting different charging rules depending on the content, and generating content-based charging result consequently.

10. The method of claim 7, further comprising:
user equipments accessing to the PDSN in the packet data network through a wireless network, and said PDSN sending user equipments' authentication requests to the AAAS, and the PDSN determining that the users are offline charging users according to the authentication result sent back by the AAAS and sending an offline charging access notification to the CCG, then the CCG responding with a charging start request; the CCG analyzing the user equipments' data sent by the PDSN, identifying service types and charging according to different service types, and the AAAS generating an offline CDR according to the charging information reported by the CCG.

11. The method of claim 7, wherein services supported by the CCG comprise:
hypertext transfer protocol services, wireless application browser services, multimedia information services, stream services, mail services, and file transport protocol services.

12. The method of claim 7, further comprising:
the PDSN charging the data packets according to a time length or traffic.

## Patentansprüche

1. System zur Offline-Vergebührung, **dadurch gekennzeichnet, dass** das System einen Paketdatendienstknoten, PDSN (packet data service node), einen Server zur Authentifizierung, Autorisierung und Abrechnung, AAAS (authentication, authorization, and accounting server), ein Gateway zur Inhaltsvergebührung, CCG (content charging gateway), und einen Online-Vergebührungsserver, OCS (online charging server), umfasst, worin:
der PDSN eingerichtet ist, um Nutzertypen zu analysieren, Datenpakete in Datenpakete von Nutzern von zu vergebührenden Inhalten und Datenpakete von Nutzern von nicht zu vergebührenden Inhalten einzuteilen, unterschiedliche Vergebührungsmethoden für verschiedene Nutzer aufgrund von Nutzersortierungsmethoden anzuwenden und Datenpakete von Nutzern von zu vergebührenden Inhalten an das CCG zu richten, wenn es bestimmt wird, dass ein Nutzer ein Nutzer von zu vergebührenden Inhalten ist und eine Offline-Vergebührung braucht;
das CCG eingerichtet ist, um den Inhalt der Datenpakete zu analysieren, die von dem PDSN gelenkt sind, mit dem AAAS zu interagieren, und eine Offline-Vergebührungsfunktion zu implementieren;
der AAAS eingerichtet ist, um einen Offline-Vergebührungs-Gesprächsdatensatz, CDR (Call Detail Record) je nach dem Ergebnis der Inhaltsvergebührung, das von dem CCG gemeldet wird, zu erzeugen.

2. System nach Anspruch 1, worin das CCG eingerichtet ist, um sich mit dem PDSN, dem AAAS und dem OCS durch Paketnetz zu verbinden.

3. System nach Anspruch 1, worin, wenn es bestimmt wird, dass der Nutzer ein Nutzer, der offline zu vergebühren ist, der PDSN eingerichtet ist, um die Datenpakete des Nutzers an das CCG zu richten, wenn die Inhaltsvergebührung gefordert wird.

4. System nach Anspruch 1, worin das CCG zumindest einen Analysator umfasst, der für die Analyse des Inhalts der Datenpakete, für die Anwendung von verschiedenen Vergebührungsregeln je nach dem Inhalt, und für die Erzeugung eines inhaltsbasierten Vergebührungsergebnisses demzufolge zuständig ist.

5. System nach Anspruch 1, worin das CCG und der PDSN unabhängige Systeme in der Logik sind; das CCG und der PDSN zusammen oder separat in der Physik implementiert werden können; und eine Art des Implementierens des CCGs und des PDSNs zusammen in der Physik in der Praxis angewendet wird.

6. System nach Anspruch 1, worin der PDSN ferner eingerichtet ist, um die Datenpakete aufgrund einer Zeitdauer oder eines Verkehrs zu vergebühren.

7. Verfahren zur Offline-Vergebührung, **dadurch gekennzeichnet, dass** das Verfahren umfasst:
Hinzufügen eines Gateway zur Inhaltsvergebührung, CCG, zu einem Paketdatennetz;
einen Paketdatendienstknoten, PDSN, der Nutzertypen analysiert, Datenpakete in Datenpakete von Nutzern von zu vergebührenden Inhalten und Datenpakete von Nutzern von nicht zu vergebührenden Inhalten einteilt, unterschiedliche Vergebührungsmethoden für verschiedene Nutzer aufgrund von Nutzersortierungsmethoden anwendet und Datenpakete von Nutzern von zu vergebührenden Inhalten an das CCG richtet, wenn es bestimmt wird, dass ein Nutzer ein Nutzer von zu vergebührenden Inhalten ist und eine Offline-Vergebührung braucht;
das CCG, das den Inhalt der Datenpakete analysiert, die von dem PDSN gelenkt sind, die Datenpakete mit Vergebührungsregeln vergebührt, die sich nach dem Inhalt richten, und die erhaltenen Vergebührungsinformationen einem Server zur Authentifizierung, Autorisierung und Abrechnung, AAAS, meldet; und
der AAAS, der einen Offline-Vergebührungs-Gesprächsdatensatz, CDR (Call Detail Record) je nach den Informationen, die von dem CCG gemeldet werden, erzeugt.

8. Verfahren nach Anspruch 7, worin der PDSN ferner Nutzer, die offline zu vergebühren sind, aufgrund von Nutzersortierungsmethoden aussucht und regelmäßig die offline zu vergebührenden Nutzer aufgrund eines Verkehrs oder einer Zeitdauer vergebührt; oder die offline zu vergebührenden Nutzer nicht vergebührt.

9. Verfahren nach Anspruch 7, worin das CCG zumindest einen Analysator umfasst, der für die Analyse des Inhalts der Datenpakete, für die Anwendung von verschiedenen Vergebührungsregeln je nach dem Inhalt, und für die Erzeugung eines inhaltsbasierten Vergebührungsergebnisses demzufolge zuständig ist.

10. Verfahren nach Anspruch 7, ferner umfassend:
Benutzer-Geräte, die zum PDSN im Paketdatennetz über ein drahtloses Netz Zugang haben, und der PDSN, der Authentifizierungsanfragen der Benutzer-Geräte an den AAAS richtet, und der PDSN aufgrund des vom AAAS zurückgesandten Authentifizierungsergebnisses bestimmt, dass die Nutzer offline zu vergebührende Nutzer sind, und eine Zugangsbenachrichtigung mit Offline-Vergebührung an das CCG richtet, und das CCG dann mit einer Vergebührungsbeginnanfrage antwortet; das CCG die Daten über die Benutzer-Geräte analysiert, die von dem PDSN gesandt wurden, Diensttypen identifiziert und je nach den unterschiedlichen Diensttypen vergebührt, und der AAAS einen Offline-CDR aufgrund der Vergebührungsinformationen, die von dem CCG berichtet wurden, erzeugt.

11. Verfahren nach Anspruch 7, worin die Dienste, die vom CCG unterstützt werden, Hypertextübertragungsprotokolldienste, drahtlose Anwendungsbrowserdienste, Multimediainformationsdienste, Streamingdienste, Postdienstleistungen und Dateiübertragungsprotokolldienste umfassen.

12. Verfahren nach Anspruch 7, ferner umfassend:
der PDSN, der die Datenpakete aufgrund einer Zeitdauer oder eines Verkehrs vergebührt.

## Revendications

1. Système de facturation hors ligne, **caractérisé en ce que** le système comprend un noeud de service de données par paquets (Packet Data Service Node, PDSN), un serveur d'authentification, d'autorisation et de comptabilisation (Authentication, Authorization and Accounting Server, AAAS), une passerelle de facturation de contenu (Content Charging Gateway, CCG), et un serveur de facturation en ligne (Online Charging Server, OCS), dans lequel :
le PDSN est apte à analyser des types d'utilisateurs, à différencier les paquets de données entre paquets de données d'utilisateurs associés à une facturation de contenu et paquets de données d'utilisateurs non associés à une facturation de contenu, adopter des politiques de facturation différentes pour des utilisateurs différents sur la base de la politique de classement des utilisateurs, et acheminer les paquets de données d'utilisateurs associés à une facturation de contenu à la CCG dès qu'on établit qu'un utilisateur est un utilisateur associé à une facturation de contenu et nécessite une facturation hors-ligne ;
la CCG est apte à analyser le contenu des paquets de données acheminés par le PDSN, entrer en interaction avec le AAAS, et mettre en oeuvre la fonction de facturation hors-ligne ;
le AAAS est apte à générer des statistiques d'appel (Call Detail Record, CDR), en fonction du résultat de la facturation de contenu signalé par la CCG.

2. Système selon la revendication 1, dans lequel ladite CCG est apte à se connecter avec le PDSN, l'AAAS et l'OCS à travers le réseau de paquets.

3. Système selon la revendication 1 dans lequel, si l'on établit que l'utilisateur est un utilisateur associé à une facturation hors-ligne, le PDSN est apte à acheminer les paquets de données de l'utilisateur à la dite CCG dès qu'une facturation de contenu est nécessaire.

4. Système selon la revendication 1, dans lequel ladite CCG comprend au moins un analyseur chargé d'analyser le contenu des paquets de données, d'adopter des règles de facturation différentes selon le contenu, et de générer un résultat correspondant de facturation sur la base du contenu.

5. Système selon la revendication 1, dans lequel la CCG et le PDSN sont des systèmes à logique indépendante ; la CCG et le PDSN peuvent être mis en oeuvre de façon physiquement combinée ou séparée ; est un moyen de mise en oeuvre de la CCG et du PDSN de façon physiquement combinée est adopté en pratique.

6. Système selon la revendication 1, dans lequel le PDSN est également apte à facturer les paquets de données en fonction d'une durée ou d'un trafic.

7. Procédé de facturation hors-ligne, **caractérisée en ce que** le procédé comprend les étapes de : ajouter une passerelle de facturation de contenu (Content Charging Gateway, CCG), dans un réseau de paquets de données ;
un noeud de service de données par paquets (Packet Data Service Node, PDSN), analysant des types d'utilisateurs, différenciant les paquets de données entre paquets de données d'utilisateurs associés à une facturation de contenu et paquets de données d'utilisateurs non associés à une facturation de contenu, adoptant des politiques de facturation différentes pour des utilisateurs différents sur la base de la politique de classement des utilisateurs, et acheminant les paquets de données d'utilisateurs associés à une facturation de contenu à la CCG dès qu'on établit qu'un utilisateur est un utilisateur associé à une facturation de contenu et nécessite une facturation hors-ligne ;
la CCG analysant le contenu des paquets de données acheminés par le PDSN, facturant les paquets de données avec des règles de facturation correspondant au contenu, et signalant les informations de facturation obtenues à un serveur d'authentification, d'autorisation et de comptabilisation (Authentication, Authorization and Accounting Server, AAAS) ; et
le AAAS générant des statistiques d'appel (Call Detail Record, CDR), en fonction des informations signalées par la CCG.

8. Procédé selon la revendication 7, dans lequel le PDSN saisit également les utilisateurs associés à la facturation hors ligne selon la politique de classement des utilisateurs et effectue la facturation pour les utilisateurs associés à la facturation hors ligne en fonction du trafic ou de la durée; ou n'effectue pas la facturation pour les utilisateurs associés à la facturation hors ligne.

9. Procédé selon la revendication 7, dans lequel ladite CCG comprend au moins un analyseur chargé d'analyser le contenu des paquets de données, d'adopter des règles de facturation différentes selon le contenu, et de générer un résultat correspondant de facturation sur la base du contenu.

10. Procédé selon la revendication 7, comprenant par tailleurs :
l'accès par les équipements utilisateurs au PDSN dans le réseau de données par paquets à travers un réseau sans fil, l'envoi de demandes d'authentification par le PDSN à l'AAAS, la détermination par le PDSN que les utilisateurs sont des utilisateurs associés à la facturation hors ligne selon le résultat d'authentification renvoyé par l'AAAS et l'envoi d'une notification d'accès de facturation hors ligne à la CCG, suivi par la réponse de la CCG avec une demande de démarrage de facturation ; l'analyse par la CCG des données des équipements utilisateurs envoyées par le PDSN, identifiant les types de services et facturant en fonction des types de services différents, et la génération par l'AAAS d'un CDR hors ligne en fonction des informations de facturation signalées par la CCG.

11. Procédé selon la revendication 7, dans lequel les services pris en charge par la CCG comprennent : des services de protocole de transfert hypertexte (Hypertext Transfer Protocol), des services de navigation avec protocol WAP, des services d'informations multimédia, de services en mode continu, des services de courrier électronique, et des services de protocol de transfert de fichiers (File Transfer Protocol).

12. Procédé selon la revendication 7, comprenant par tailleurs :
la facturation par le PDSN des paquets de données en fonction d'une durée ou d'un trafic.
